(19) Europäisches Patentamt
European Patent Office
Office européen des brevets

(11) **EP 2 251 675 A1**

(12) **EUROPÄISCHE PATENTANMELDUNG**

(43) Veröffentlichungstag:
**17.11.2010 Patentblatt 2010/46**

(51) Int Cl.:
*G01N 21/64* (2006.01)     *A61B 5/00* (2006.01)

(21) Anmeldenummer: **09006583.0**

(22) Anmeldetag: **15.05.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(71) Anmelder:
- **Fraunhofer-Gesellschaft zur Förderung der angewandten Forschung e.V.**
  **80686 München (DE)**
- **SIEMENS AKTIENGESELLSCHAFT**
  **80333 München (DE)**

(72) Erfinder:
- **Schreiber, Jürgen**
  **01189 Dresden (DE)**

- **Opitz, Jörg**
  **01219 Dresden (DE)**
- **Gerich, Carola**
  **01099 Dresden (DE)**
- **Fehre, Jens**
  **91353 Hausen (DE)**
- **Salomon, Georg**
  **20146 Hamburg (DE)**

(74) Vertreter: **Pfenning, Meinig & Partner GbR Patent- und Rechtsanwälte An der Frauenkirche 20 01067 Dresden (DE)**

(54) **Verfahren zur Erkennung von Tumorbehaftetem Zellgewebe**

(57) Die Erfindung betrifft ein Verfahren zur Erkennung von tumorbehaftetem Zellgewebe an lebenden entnommenen Zellgewebeproben, insbesondere an Prostatazellgewebe. Aufgabe der Erfindung ist es, eine Erkennung von tumorbehaftetem Zellgewebe in verkürzter Zeit und mit ausreichender Befundsicherheit erreichen zu können. Das erfindungsgemäße Verfahren wird an lebenden entnommenen Zellgewebeproben durchgeführt. Eine Zellgewebeprobe wird in eine optisch nicht transparente Kammer eingesetzt. Nach dem Einsetzen wird mit einer Strahlungsquelle elektromagnetische Strahlung lokal definiert auf die Zellgewebeprobe emittiert und nach einem Abschalten der Strahlungsquelle zur Zeit $t_0$ am Zellgewebe das Abklingverhalten der durch die elektromagnetische Strahlung angeregten Eigenfluoreszenzintensität des Zellgewebes zeit- und spektralaufgelöst erfasst. Die Erfassung der Eigenfluoreszenzintensität erfolgt dabei mit konstanter Abtastrate und wird für mindestens eine Wellenlänge durchgeführt. Mit den ermittelten Intensitätsmesswerten wird die Differenz-Autokorrelations-Funktion $C(t)$ des Intensitätsabklingverhaltens bestimmt und daraus die fraktale Dimension $D_F$ für das jeweilige bestrahlte Zellgewebe berechnet. Der Wert der fraktalen Dimension $D_F$ wird mit einem tumorspezifischen Schwellwert verglichen und bei Überschreiten des Schwellwertes wird das bestrahlte Zellgewebe der Zellgewebeprobe als tumorbehaftet eingestuft.

Fig. 3

EP 2 251 675 A1

**Beschreibung**

Die Erfindung betrifft ein Verfahren zur Erkennung von tumorbehaftetem Zellgewebe an lebenden entnommenen Zellgewebeproben, insbesondere an Prostatazellgewebe.

Bei den verschiedenen auftretenden Carzinomarten ist es gängige Praxis von Tumor befallenes Zellgewebe operativ zu entfernen. Dabei ist es erforderlich, das befallene Zellgewebe vollständig zu entfernen, so dass ein Fortschreiten und Ausbreiten der Krankheit vermieden werden kann. Insbesondere bei Prostatazellgewebe ist es wünschenswert, einen möglichst hohen Anteil an nicht befallenem Zellgewebe zu erhalten, um notwendige Funktionen (Kontinenz, Potenz) weiter zu gewährleisten. Es ist daher erforderlich tumorbehaftetes Zellgewebe zu lokalisieren, um befallenes Zellgewebe nachfolgend gezielter operativ entfernen zu können.

Üblicherweise werden Schnellschnitte unmittelbar bei einem operativen Eingriff genommen und in einem Labor pathologisch untersucht. Bei der Untersuchung durch einen Pathologen wird die Zellgewebeprobe tief gefroren und daraus Schnitte angefertigt, die dann durch den Pathologen beurteilt werden. Hierfür ist ein hoher Zeitaufwand erforderlich, da nicht nur die Probenvorbereitung sondern auch die Dokumentierung und der Transport Zeit erfordern. Auch Wartezeiten können nicht vermieden werden. Dies führt zu einer hohen Belastung des jeweiligen Patienten und blockiert einen Operationssaal längere Zeit.

Neben der Beurteilung von Schnellschnitten ist es auch bekannt, eine Fluoreszenz-Zytoskopie für eine Tumordiagnose durchzuführen. Dabei wird tumorbehaftetes Zellgewebe mit geeigneten chemischen Substanzen lichtempfindlich gemacht und bei Bestrahlung mit Licht Fluoreszenz an so vorbereiteten Zellen angeregt. Dabei weist das Licht zur Anregung eine andere Farbe, als das Fluoreszenzlicht auf. Die eingesetzten Substanzen sind aber stark phototoxisch und können am entsprechend behandelten Gewebe Nekrose verursachen. Dies kann aber auch für eine Therapie gegen karzinome Tumore ausgenutzt werden. Dabei ist aber die Kenntnis der Positionen und der Ausbreitung von tumorbehaftetem Zellgewebe erforderlich.

Zur Erkennung von tumorbehaftetem Zellgewebe wird die so genannte 5-ALA induzierte Detektion, bei der 5-Aminolävulinsäure injiziert wird, oder Verfahren die als Hexvix und TOOKAD kommerziell bekannt sind und bei denen andere fotoaktive Substanzen eingesetzt werden, eingesetzt.

Dabei ist es nachteilig, dass die Substanzen in den Körper eines Patienten eingebracht werden müssen, die für den jeweiligen Patienten unmittelbar aber auch nachfolgend über einen längeren Zeitraum belastend sind, da er unter erhöhter Lichtempfindlichkeit leidet. Nach dem Injizieren der Substanzen können die Untersuchungen nicht unmittelbar danach durchgeführt werden, da eine Reaktionszeit, die von Patient zu Patient variieren kann, abgewartet werden muss.

Außerdem ist aus DE 689 25 586 T2 ein Verfahren für eine laserinduzierte Fluoreszenz von Gewebe bekannt. Bei dem eine Erkennung bestimmter Zellgewebearten durch eine Fluoreszenzanregung und die Detektion bestimmter charakteristischer Wellenlängen im detektierten Wellenlängenspektrum des Fluoreszenzlichts auf die jeweilige Zellgewebeart geschlossen werden können soll.

Es hat sich aber gezeigt, dass die Eigenfluoreszenz von in körpereigenen zur Fluoreszenz anregbaren Chromophoren bei Zellgewebe, das tumorbehaftet oder gesund sein kann, an Hand des Vorkommens einer oder ggf. auch mehreren Wellenlängen die im Fluoreszenzlichtspektrum vorkommen nicht eindeutig ist, da ein kooperatives Verhalten der untersuchten Zellen nicht vernachlässigt werden kann. Diese unterschiedlichen Faktoren und die biomolekulare Zellstruktur haben starken Einfluss und es ist nicht mit ausreichender Sicherheit eine Zuordnung, ob es sich um gesundes oder tumorbehaftetes Zellgewebe handelt, möglich.

Es ist daher Aufgabe der Erfindung eine Erkennung von tumorbehaftetem Zellgewebe in verkürzter Zeit und mit ausreichender Befundsicherheit erreichen zu können. Erfindungsgemäß wird diese Aufgabe mit einem Verfahren, das die Merkmale des Anspruchs 1 aufweist, gelöst. Vorteilhafte Ausgestaltungen und Weiterbildungen der Erfindung können mit in untergeordneten Ansprüchen bezeichneten Merkmalen erreicht werden.

Das erfindungsgemäße Verfahren wird an lebenden entnommenen Zellgewebeproben durchgeführt. Eine solche, auch als Stanze bezeichnete Zellgewebeprobe wird in eine optisch nicht transparente Kammer eingesetzt. Nach dem Einsetzen wird mit einer Strahlungsquelle elektromagnetische Strahlung lokal definiert auf die Zellgewebeprobe emittiert und nach einem Abschalten der Strahlungsquelle zur Zeit $t_0$ am Zellgewebe das Abklingverhalten der durch die elektromagnetische Strahlung angeregten Eigenfluoreszenzintensität des Zellgewebes zeit- und spektralaufgelöst erfasst. Die Erfassung der Eigenfluoreszenzintensität erfolgt dabei mit konstanter Abtastrate und wird für mindestens eine Wellenlänge durchgeführt.

Mit den ermittelten Intensitätsmesswerten wird die Differenz-Autokorrelations-Funktion C(t) des Intensitätsabklingverhaltens nach den Gleichungen (1) und (2) bestimmt.

$$I(t) = I(t_0) - [I(t_0) - I(t \to \infty)] * [1 - R(t-t_0)] \quad (1)$$

mit

$$R(t-t_0) = < \Delta I(t) \; \Delta I(t_0) >_t \; / <\Delta I^2>_t$$

und

$$\Delta I(t) = I(t) - I(t \to \infty) \tag{2}.$$

Dabei ist $I(t \to \infty)$ die Intensität des angeregten Fluoreszenzlichts nach unendlich langer Relaxation, die sehr klein ist. Die Relaxationsfunktion R(t) ergibt sich aus der Korrelations-Funktion der Fluoreszenzfluktuationen, wobei $< >_t$ den zeitlichen Mittelwert darstellt.

Die Funktion C(t) = 2[1 - R(t)] stellt die dazugehörige Differenz-Korrelations-Funktion dar, für die bei kooperativen Fluoreszenzvorgängen das folgende Verhalten berücksichtigt werden kann:

$$C(t) \sim t^{2H} \tag{3}.$$

Der Exponent H oder die daraus berechenbare fraktale Dimension der stochastischen Intensitätsschwankungen $D_F$ ist dabei eine charakteristische Größe für die Bewertung.

Dabei ergibt sich $D_F$ = 2 - H und kann zur Unterscheidung von gesundem und tumorbehaftetem Zellgewebe herangezogen werden. Der Exponent H kann durch lineare Regression ermittelt werden.

Unter Berücksichtigung der angegebenen Gleichungen wird die fraktale Dimension $D_F$ für das jeweils bestrahlte Zellgewebe berechnet und dann der Wert der ermittelten fraktalen Dimension $D_F$ mit einem tumorspezifischen Schwellwert verglichen. Bei Überschreiten des Schwellwertes wird das bestrahlte Zellgewebe der Zellgewebeprobe als tumorbehaftet eingestuft. Bei einem Unterschreiten dieses Schwellwert ist das Zellgewebe gesund. Der Schwellwert ist ein Zahlenwert zwischen 1 und 2.

So kann an der jeweiligen Zellgewebeprobe an mehreren Positionen eine Bestrahlung, Detektion und Berechnung der fraktalen Dimension $D_F$ durchgeführt werden, um gesundes Zellgewebe und ggf. tumorbehaftetes Zellgewebe zu lokalisieren.

Bei der Auswertung des Intensitätsabklingverhaltens werden kollektive Elektronenübergänge im Zellgewebe, bei der Erfindung, über ein algebraisches Zeitverhalten beschrieben

Bevorzugt ist es, monochromatische elektromagnetische Strahlung für die Eigenfluoreszenzanregung des bestrahlten Zellgewebes einzusetzen. Hier eignet sich besonders elektromagnetische Strahlung im Wellenlängenbereich zwischen 200 nm bis 650 nm. Als Strahlungsquelle können Laserlichtquellen eingesetzt werden. Für die Anregung der Eigenfluoreszenz hat sich elektromagnetische Strahlung mit einer Wellenlänge von 337 nm als günstig erwiesen.

Bei der Erfindung kann, wie bereits zum Ausdruck gebracht, lediglich eine ausgewählte Wellenlänge aus dem Spektrum der Eigenfluoreszenz des zu untersuchenden Zellgewebes erfasst und dann berücksichtigt werden. Es können aber auch zwei und mehr Wellenlängen, die voneinander abweichen und dann deutlich größer bzw. kleiner in Bezug zueinander sein können, berücksichtigt werden.

Günstig ist es aber, Intensitätsmesswerte innerhalb eines Intervalls um eine Wellenlänge der angeregten Eigenfluoreszenz zu erfassen und die Differenz-Autokorrelations-Funktion des Intensitätsabklingverhaltens C(t) der Mittelwerte, die aus den gleichzeitig für die unterschiedlichen Wellenlängen innerhalb des Wellenlängenintervalls detektierten Fluoreszenzintensäten berechnet worden sind, zu bestimmen und daraus die fraktale Dimension $D_F$ für das bestrahlte Zellgewebe zu berechnen.

Für die Mittelwertbildung sollten mindestens 30 Wellenlängen aus dem ausgewählten Wellenlängenintervall berücksichtigt werden. So sollte die Differenz der Abstände der dabei berücksichtigten Wellenlängen aus diesem Wellenlängenintervall jeweils gleich groß sein. So kann beispielsweise die Detektion innerhalb eines Wellenlängenintervalls von 421 nm $\pm$ 15 nm durchgeführt werden.

Die Detektion kann mit einem Spektrometer durchgeführt und bei einer Abtastrate $\leq$1000 ps, bevorzugt $\leq$ 100 ps, besonders bevorzugt bei ca. 50 ps detektiert werden.

Die elektromagnetische Strahlung für die Anregung der Eigenfluoreszenz kann über mindestens eine optische Faser auf das Zellgewebe gerichtet und nach dem Ausschalten der Strahlungsquelle das Eigenfluoreszenzlicht über die selbe(n) optische(n) Faser(n) auf den Detektor gerichtet werden. Dabei kann ein Strahlteiler eingesetzt werden, mit dem die für die Detektion genutzte in Folge der Eigenfluoreszenz von der Zellgewebeprobe emittierte elektromagnetische Strahlung auf den Detektor gerichtet werden kann.

Die zu detektierenden Zellgewebeproben sollten vor und während der Detektion gekühlt und dabei auf einer konstanten Temperatur gehalten werden. Dabei soll bevorzugt eine Temperatur von 15 °C eingehalten werden. Eine Temperierung ist günstig, um vergleichbare Bedingungen einhalten zu können. Zellgewebeproben können auf einem Probenträger bzw. in der Kammer, in der die Untersuchung durchgeführt werden, gekühlt werden. Geeignete Kühlmittel oder zur Kühlung geeignete Elemente können daran bzw. darin angeordnet sein.

An einer Zellgewebeprobe können an mehreren Positionen solche Untersuchungen durchgeführt werden. Dabei sollte jedoch jeweils eine gleiche Bestrahlung an den ausgewählten Positionen der Zellgewebeprobe eingehalten werden. So sollte mit jeweils gleicher Energie eine jeweils gleich große Fläche bestrahlt werden. Hierzu sollte der Abstand einer oder mehrerer optischer Fasern zur zu bestrahlenden Oberfläche der Zellgewebeprobe konstant sein. Für eine Auswertung und ggf. Berücksichtigung bei einem unmittelbar nachfolgend oder später durchzuführenden operativen Eingriff an einem Patienten von dem die Zellgewebeprobe entnommen worden ist, ist die Kenntnis der jeweiligen Position an der Zellgewebeprobe und der Position der Entnahme so zu erfassen und zu dokumentieren, dass sie nachvollzogen werden können.

Die Untersuchungen an einer Zellgewebeprobe können sukzessive oder gleichzeitig an mehreren Positionen durchgeführt werden. Im letztgenannten Fall kann elektromagnetische Strahlung beispielsweise über mehrere entsprechend angeordnete optische Fasern zur Anregung der Eigenfluoreszenz auf die Zellgewebeprobe auf verschiedene Orte gerichtet und nach dem Abschalten der Strahlungsquelle dann die Intensität I(t) der in Folge der Eigenfluoreszenz des Zellgewebes von dort emittierte elektromagnetische Strahlung über optische Fasern zu einem Detektor geführt werden.

Mit der Erfindung kann eine Untersuchung zeitnah und ggf. unmittelbar in einem Operationssaal durchgeführt werden. Es besteht die Möglichkeit tumorbehaftetes Zellgewebe von gesundem Zellgewebe mit sehr hoher Wahrscheinlichkeit zu unterscheiden. In Kenntnis des jeweiligen Entnahmeortes bietet die Erfindung eine gute Entscheidungsgrundlage, wo und wieviel Zellgewebe operativ entfernt werden soll.

Eine zeitaufwändige Präparation des zu untersuchenden Zellgewebes, wie sie bei einem Schnellschnitt erforderlich ist, entfällt Dadurch kann die Belastung von Patienten bei einem operativen Eingriff reduziert werden, da das Untersuchungsergebnis nach deutlich kürzerer Zeit vorliegt. Es kann sehr gut zwischen malignen und benignen Zellgewebe unterschieden werden.

Es ist auch keine Injektion zusätzlicher Substanzen in den Körper von Patienten, mit den eingangs genannten Nachteilen, erforderlich.

Nachfolgend soll die Erfindung beispielhaft weiter erläutert werden.

Dabei zeigen:

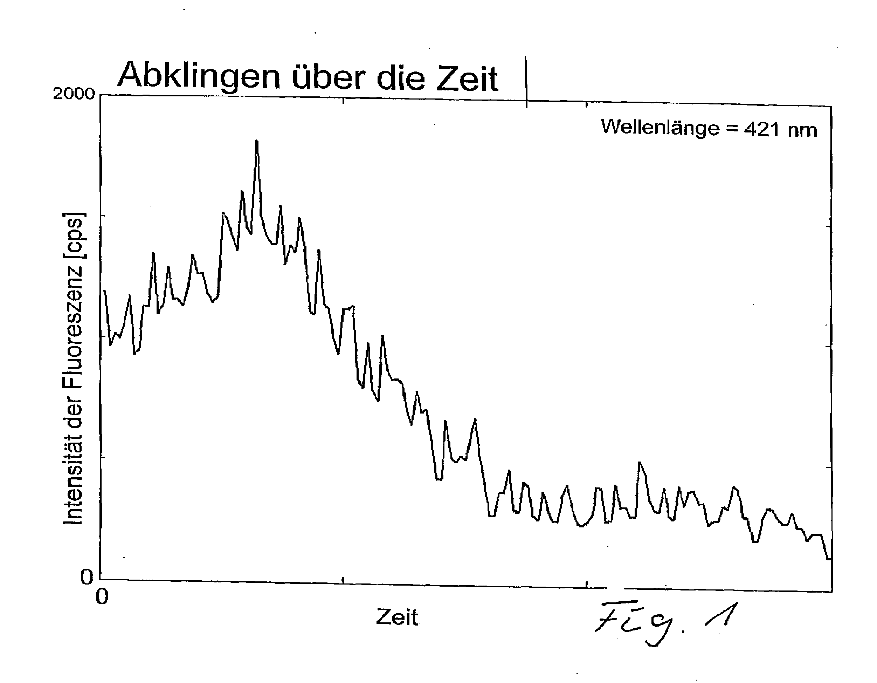

Figur 1 ein Diagramm des zeitaufgelöst erfassten Intensitätsabklingverhaltens bei einer konstanten Wellenlänge von 421 nm;

Figur 2 ein Diagramm des zeitaufgelöst erfassten Intensitätsabklingverhaltens, das mit dem Mittelwert von mehreren Wellenlängen innerhalb eines Wellenlängenintervalls um die Wellenlänge 421 nm erstellt worden ist und

Figur 3 den Verlauf der Differenz-Autokorrelations-Funktion über die Zeit beim Abklingen der Intensität.

Für die Untersuchungen wurde Prostatazellgewebe von Patienten in Form von Stanzen.entnommen. Die so erhaltenen Zellgewebeproben wurden in eine Nut, die eine Aufnahme der Zellgewebeproben darstellte eingelegt und elektromagnetische Strahlung, über eine optische Faser auf bestimmte vorgegebene Positionen der Zellgewebeproben gerichtet. Als Strahlungsquelle wurde ein Stickstofflaser eingesetzt. Die für die Eigenfluoreszenzanregung des Zellgewebes eingesetzte elektromagnetische Strahlung hatte eine Wellenlänge von 337 nm.

Die entnommenen Zellproben wurden auf eine Temperatur von 15 °C gekühlt und zumindest bis nach Beendigung der Untersuchung auf dieser Temperatur gehalten.

Über die selbe optische Faser wurde nach dem Abschalten der Strahlungsquelle bei $t_0$ die in Folge der Eigenfluoreszenz vom Zellgewebe emittierte elektromagnetische Strahlung auf ein Spektrometer gerichtet, mit dem eine Detektion im Wellenlängenintervall von ca. 300 nm bis ca. 600 nm möglich war.

Es wurde eine charakteristische Wellenlänge von 421 nm ausgewählt, bei der erhöhte Intensitäten der Eigenfluoreszenz auftraten.

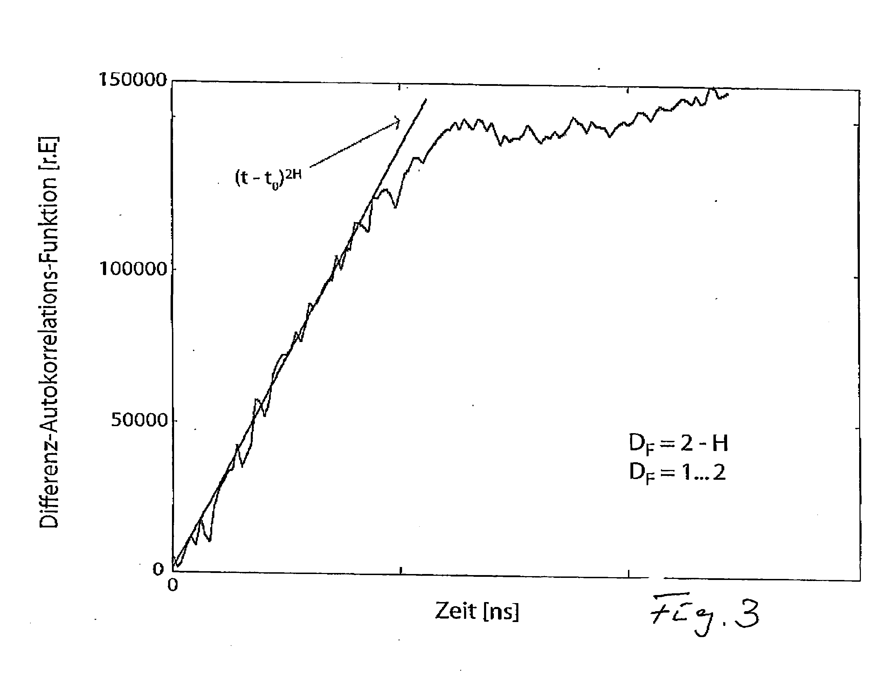

Bei der Detektion wurde eine Abtastrate von 50 ps eingehalten und vom Zeitpunkt $t_0$ über eine Zeit von 10 ns eine Detektion der Intensität vorgenommen. Mit den Intensitätsmesswerten wurde eine Auswertung gemäß den Gleichungen (1) bis (3) vorgenommen und die Differnz-Autokorrelations-Funktion ermittelt, wie in Figur 3 gezeigt.

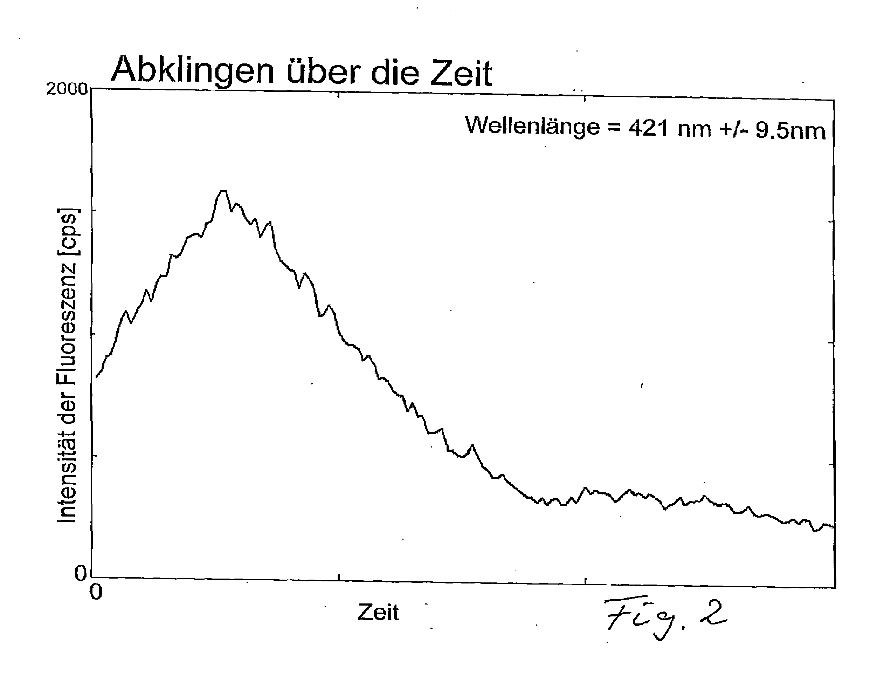

Da beim Abklingverhalten der Intensität einer einzelnen wellenlänge ein Rauschen zu verzeichnen war, wurde die Auswertung mit gebildeten Mittelwerten in analoger Form wiederholt. Dabei wurden Intensitätswerte innerhalb eines Wellenlängenintervalls von 421 nm ± 9,5 nm genutzt. Das so ermittelte Intensitätsabklingverhalten gibt Figur 2 wieder. Die Mittelwertbildung erfolgte dabei aus 60 Wellenlängen aus diesem Wellenlängenintervall, die jeweils eine Differenz von 0,315 nm zueinander aufwiesen.

Wie aus dem in Figur 3 gezeigten Diagramm hervor geht kann mit der ermittelten Differenz-Autokorrelations-Funktion und dem Anstieg einer Geraden mit $(t - t_0)^{2H}$ und in Kenntnis des Exponenten H der Wert der fraktalen Dimension $D_F$ bestimmt werden.

Der ermittelte Wert $D_F$ kann für die jeweils untersuchte Position der jeweiligen Zellgewebeprobe mit einem tumorspezifischen Schwellwert verglichen werden. Für die untersuchten Prostatatumore lag dieser Schwellwert zwischen 1,31 und 1,32.

Je nach Abweichung der ermittelten Werte für $D_F$ kann nicht nur ausschließlich eine gut - schlecht Aussage erhalten werden. Es können auch differenziertere Zellgewebezustände, wie z.B. benigne Prostata-Hyperlapsie (BPN) oder prostatische intra-epitheliale Neolapsie (PIN), als eine Vorstufe eines Prostatakarzinoms, unterschieden werden.

Liegt der ermittelte Wert $D_F$ aber unterhalb des Schwellwertes kann davon ausgegangen werden, dass das untersuchte Zellgewebe an der jeweiligen Zellegewebeprobe zumindest am Ort der Probe an dem die Untersuchung durchgeführt worden ist, frei von Tumorzellen gesundes Zellgewebe ist.

Die Erfindung kann aber auch an mindestens zwei mit dem Spektrometer erfassbaren Wellenlängen, die einen größeren Abstand zueinander aufweisen durchgeführt werden. So kann das zeitliche Intensitätsabfallverhalten beispielsweise bei den Wellenlängen 370 nm und 430 nm, ggf. auch mit einer beschriebenen Mittelwertbildung, durchgeführt werden.

## Patentansprüche

1. Verfahren zur Erkennung von tumorbehaftetem Zellgewebe an lebenden entnommenen Zellgewebeproben, bei dem innerhalb einer optisch nicht transparenten Kammer mit einer Strahlungsquelle elektromagnetische Strahlung lokal definiert auf eine Zellgewebeprobe emittiert und nach einem Abschalten der Strahlungsquelle am Zellgewebe das Abklingverhalten der durch die elektromagnetische Strahlung angeregten Eigenfluoreszenzintensität des Zellgewebes zeit- und spektralaufgelöst mit konstanter Abtastrate für mindestens eine Wellenlänge mit einem Detektor erfasst und mit den ermittelten Intensitätsmesswerten die Differenz-Autokorrelations-Funktion C(t) des Intensitätsabklingverhaltens bestimmt wird, daraus die fraktale Dimension $D_F$ für das jeweilige bestrahlte Zellgewebe berechnet wird und

der Wert der fraktalen Dimension $D_F$ mit einem tumorspezifischen Schwellwert verglichen wird; wobei bei Überschreiten des Schwellwertes das bestrahlte Zellgewebe der Zellgewebeprobe als tumorbehaftet eingestuft wird.

2. Verfahren nach Anspruch 1, **dadurch gekennzeichnet, dass** monochromatische elektromagnetische Strahlung für die Eigenfluoreszenzanregung des bestrahlten Zellgewebes eingesetzt wird.

3. Verfahren nach Anspruch 1 oder 2, **dadurch gekennzeichnet, dass** Intensitätsmesswerte innerhalb eines Intervalls um eine Wellenlänge der angeregten Eigenfluoreszenz erfasst und die Differenz-Autokorrelations-Funktion des Intensitätsabklingverhaltens C(t) der Mittelwerte, die aus den gleichzeitig für die unterschiedlichen Wellenlängen innerhalb des Wellenlängenintervalls detektierten Fluoreszenzintensäten berechnet worden sind, bestimmt und daraus die fraktale Dimension $D_F$ für das bestrahlte Zellgewebe berechnet wird.

4. Verfahren nach einem der vorhergehenden Ansprüche, **dadurch gekennzeichnet, dass** die Detektion mit einem Spektrometer durchgeführt und bei einer Abtastrate ≤ 1000 ps detektiert wird.

5. Verfahren nach einem der vorhergehenden Ansprüche, **dadurch gekennzeichnet, dass** für die Anregung der Eigenfluoreszenz monochromatische Strahlung mit einer Wellenlänge von 337 nm eingesetzt und die Detektion innerhalb eines Wellenlängenintervalls von 421,7 nm ± 15 nm durchgeführt wird.

6. Verfahren nach einem der vorhergehenden Ansprüche, **dadurch gekennzeichnet, dass** für die Mittelwertbildung mindestens 30 Wellenlängen aus dem Wellenlängenintervall berücksichtigt werden.

7. Verfahren nach einem der vorhergehenden Ansprüche, **dadurch gekennzeichnet, dass** die elektromagnetische Strahlung für die Anregung der Eigenfluoreszenz über mindestens eine optische Faser auf das Zellgewebe gerichtet und nach dem Ausschalten der Strahlungsquelle das Eigenfluoreszenzlicht über die selbe(n) optische(n) Faser(n) auf den Detektor gerichtet wird.

8. Verfahren nach einem der vorhergehenden Ansprüche, **dadurch gekennzeichnet, dass** die zu detektierende Zellgewebeprobe vor und während der Detektion gekühlt und dabei auf einer konstanten Temperatur gehalten wird.

9. Verfahren nach einem der vorhergehenden Ansprüche, **dadurch gekennzeichnet, dass** Prostatazellgewebe für eine Zellgewebeprobe eingesetzt wird.

## Abklingen über die Zeit

Wellenlänge = 421 nm

Intensität der Fluoreszenz [cps]

Zeit

*Fig. 1*

EP 2 251 675 A1

Abklingen über die Zeit

Wellenlänge = 421 nm +/- 9.5nm

Intensität der Fluoreszenz [cps]

2000

0

0

Zeit

Fig. 2

EP 2 251 675 A1

EP 2 251 675 A1

Differenz-Autokorrelations-Funktion [r.E]

150000

100000

50000

0

$(t - t_0)^{2H}$

$D_F = 2 - H$

$D_F = 1 \ldots 2$

0

Zeit [ns]

Fig. 3

Europäisches
Patentamt

European
Patent Office

Office européen
des brevets

# EUROPÄISCHER RECHERCHENBERICHT

**Nummer der Anmeldung**

EP 09 00 6583

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 2009/059072 A2 (UNIV TUFTS [US]; LEVITT JONATHAN [US]; MUJAT CLAUDIA [US]; HUNTER MART) 7. Mai 2009 (2009-05-07)<br>* Absatz [0037] - Absatz [0038] *<br>* Absatz [0041] - Absatz [0045] *<br>----- | 1-9 | INV.<br>G01N21/64<br>A61B5/00 |
| Y | WEISS MATTHIAS ET AL: "Anomalous protein diffusion in living cells as seen by fluorescence correlation spectroscopy."<br>BIOPHYSICAL JOURNAL,<br>Bd. 84, Nr. 6, Juni 2003 (2003-06), Seiten 4043-4052, XP002550854<br>ISSN: 0006-3495<br>* Seite 4045 *<br>* Seite 4049, rechte Spalte - Seite 4050, linke Spalte *<br>----- | 1-9 | |
| A | PETERSEN N O ET AL: "QUANTITATION OF MEMBRANE RECEPTOR DISTRIBUTIONS BY IMAGE CORRELATION SPECTROSCOPY: CONCEPT AND APPLICATION"<br>BIOPHYSICAL JOURNAL, NEW YORK, US, US,<br>Bd. 65, Nr. 3,<br>1. September 1993 (1993-09-01), Seiten 1135-1146, XP001000182<br>ISSN: 0006-3495<br>* Zusammenfassung *<br>* Seite 1135, rechte Spalte *<br>* Seite 1136, rechte Spalte, Absatz 1 - Absatz 2 *<br>-----<br>-/-- | 1-9 | **RECHERCHIERTE SACHGEBIETE (IPC)**<br>G01N<br>A61B |

Der vorliegende Recherchenbericht wurde für alle Patentansprüche erstellt

| Recherchenort | Abschlußdatum der Recherche | Prüfer |
|---|---|---|
| Den Haag | 16. Oktober 2009 | D'Alessandro, Davide |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes
    Dokument

EPO FORM 1503 03.82 (P04C03)

Europäisches
Patentamt
European
Patent Office
Office européen
des brevets

**EUROPÄISCHER RECHERCHENBERICHT**

Nummer der Anmeldung

EP 09 00 6583

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | BENDA ALES ET AL: "TCSPC upgrade of a confocal FCS microscope" REVIEW OF SCIENTIFIC INSTRUMENTS, AIP, MELVILLE, NY, US, Bd. 76, Nr. 3, 1. März 2005 (2005-03-01), Seiten 33106-033106, XP012079241 ISSN: 0034-6748 * Seite 2 - Seite 3 * * Abbildung 1 * ----- | 1-9 | |
| A | SALOMON G ET AL: "Prostate cancer detection by laser induced autofluorescence and multicomponent spectroscopy" PROCEEDINGS OF SPIE - THE INTERNATIONAL SOCIETY FOR OPTICAL ENGINEERING - INTERNATIONAL CONFERENCE ON LASERS, APPLICATIONS, AND TECHNOLOGIES 2007: LASER TECHNOLOGIES FOR MEDICINE 2007 SPIE US, Bd. 6734, 2007, XP002550855 * Seite 2 - Seite 3 * * Abbildung 1 * ----- | 5,7-9 | |
| A | WO 02/069784 A2 (DARTMOUTH COLLEGE [US]; MYCEK MARY-ANN [US]; DMITROVSKY ETHAN [US]; PI) 12. September 2002 (2002-09-12) * Seite 6, Zeile 14 - Seite 10, Zeile 9 * * Seite 15, Zeile 29 - Seite 16, Zeile 11 * * Seite 20, Zeile 18 - Seite 21, Zeile 21 * ----- | 1-9 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 16. Oktober 2009 | D'Alessandro, Davide |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 00 6583

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-10-2009

| Im Recherchenbericht angeführtes Patentdokument | Datum der Veröffentlichung | Mitglied(er) der Patentfamilie | Datum der Veröffentlichung |
|---|---|---|---|
| WO 2009059072 A2 | 07-05-2009 | KEINE | |
| WO 02069784 A2 | 12-09-2002 | EP 1372483 A2 | 02-01-2004 |
| | | JP 2005504561 T | 17-02-2005 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 68925586 T2